Europäisches Patentamt

European Patent Office

Office européen des brevets

(19)

(11) Veröffentlichungsnummer: **0 012 807**
**B1**

(12) **EUROPÄISCHE PATENTSCHRIFT**

(45) Veröffentlichungstag der Patentschrift:
09.12.81

(51) Int. Cl.³: **C 05 D 9/02**

(21) Anmeldenummer: 79104116.3

(22) Anmeldetag: 24.10.79

(54) Spurenelementdüngemittelpasten, Verfahren zu ihrer Herstellung und ihre Verwendung zur Pflanzendüngung.

(30) Priorität: 27.10.78 DE 2846832

(43) Veröffentlichungstag der Anmeldung:
09.07.80 Patentblatt 80/14

(45) Bekanntmachung des Hinweises auf die Patenterteilung:
09.12.81 Patentblatt 81/49

(84) Benannte Vertragsstaaten:
**AT BE CH DE FR GB IT NL SE**

(56) Entgegenhaltungen:
**BE-A-523 036**
**DE-A-1 592 622**
**DE-A-2 434 874**
**FR-A-2 213 962**
**FR-A-2 222 331**
**GB-A-1 364 464**
**US-A-3 131 048**
**US-A-3 870 749**

(73) Patentinhaber: **HOECHST AKTIENGESELLSCHAFT,
Zentrale Patentabteilung Postfach 80 03 20,
D-6230 Frankfurt/Main 80 (DE)**

(72) Erfinder: **Meyer, Klaus, Dr., im Stückes 36,
D-6233 Kelkheim (Taunus) (DE)**

Spurenelementdüngemittelpasten, Verfahren zu ihrer Herstellung und ihre Verwendung zur Pflanzendüngung

Gegenstand der Erfindung sind wasserlösliche Spurenelementdüngemittelpasten, Verfahren zu ihrer Herstellung und ihre Verwendung zur Pflanzendüngung.

Wasserlösliche Spurenelementdüngemittel sind bisher nur in fester (vgl. DE 2313921) oder in flüssiger Form, z.B. als wässrige Lösungen (vgl. DE 434 875) bekannt. Die Beständigkeit von flüssigen Spurenelement-düngemitteln ist aber meist unbefriedigend und es kann bei der Lagerung solcher Flüssigdünger z.B. zu Ausfällungen von gelösten Bestandteilen in wasserunlöslicher, d.h. nicht unmittelbar düngewirksamer Form kommen.

Die Spurenelementkationen liegen in den bekannten Produkten häufig in komplexierter oder teilweise komplexierter Form vor. Es können z.B. bei festen Produkten auch Gemische aus wasserlöslichen Spurenelementsalzen und wasserlöslichen Komplexbildnern verwendet werden, so daß die Komplexierung der Spurenelementkationen beim Auflösen der festen Gemische in Wasser erfolgen kann. Bekannte Komplexbildner sind z.B. die Alkalisalze von N-Carboxyalkylaminosäuren, die mit Spurenelementkationen wasserlösliche Chelatverbindungen bilden können. Denn bekanntlich setzt eine Aufnahme durch die Pflanzen und die dadurch mögliche biologische Wirksamkeit die Wasserlöslichkeit der Spurenelementverbindungen voraus.

Die Anwendung der Spurenelementdüngemittel erfolgt daher im allgemeinen aus verdünnten wässrigen Lösungen, welche z.B. durch Auflösen von festen, löslichen Spurenelementverbindungen in Wasser oder durch Verdünnen von flüssigen Lösungskonzentraten erhalten werden können.

Die festen Spurenelementdüngemittel benötigen jedoch einige Zeit, bis sie sich vollständig in Wasser aufgelöst haben. Sie können außerdem bei der Lagerung zusammenbacken und sich beim Transport entmischen. Die Flüssigkonzentrate haben einen relativ niedrigen Nährstoffgehalt, sind hinsichtlich ihrer Beständigkeit problematisch und erfordern für Lagerung und Transport flüssigkeitsdichte und korrosionsbeständige Behälter. Die Dosierungsmöglichkeiten sowohl von festen als auch von flüssigen Spurenelementdüngemitteln sind zudem unbefriedigend.

Gegenstand der vorliegenden Erfindung sind daher wasserlösliche Spurenelementdüngemittelpasten, gekennzeichnet durch einen Gehalt von 55 bis 89 Gew.%, vorzugsweise 67 bis 77 Gew.% wasserlöslicher Spurenelementverbindungen, vorzugsweise von Magnesium und/oder Eisen und/oder Zink und/oder Mangan und/oder Kupfer und/oder Kobalt und/oder Nickel und/oder Bor und/oder Molybdän, wobei die Spurenelementkationen zu 25 bis 100 Mol%, vorzugsweise 40 bis 70 Mol% in komplexierter Form, vorzugsweise in chelatkomplexierter Form mit N-Carboxyalkylaminosäuren vorliegen, 2 bis 7 Gew.%, vorzugsweise 3 bis 6 Gew.% Ammoniumstickstoff als Makronährstoff, 2 bis 18 Gew.%, vorzugsweise 4 bis 12 Gew.% Polyglykoläther mit mindestens 9 AeO-Einheiten, vorzugsweise vom mittleren Molekulargewicht 400 bis 10000, insbesondere 600 bis 6000 und/oder wasserlöslicher Polyglykolätherderivate mit mindestens 8 AeO-Einheiten, vorzugsweise mit 9 bis 230 und insbesondere mit 11 bis 60 AeO-Einheiten, sowie 7 bis 20 Gew.% Wasser.

Der Begriff AeO-Einheiten bedeutet dabei die Anzahl Äthylenoxydeinheiten pro Molekül Polyglykoläther bzw. Polyglykolätherderivat, da letztere bekanntlich Additionsprodukte des Äthylenoxyds darstellen [vgl. z.B. Kurt Lindner, „Tenside-Textilhilfsmittel-Waschrohstoffe", Wiss. Verlagsges. Stuttgart (1964) Bd. I, S. 183 und 865 ff].

Gegenstand der Erfindung ist weiterhin ein Verfahren zur Herstellung der oben genannten wasserlöslichen Spurenelementdüngemittelpasten, das dadurch gekennzeichnet ist, daß man eine Mischung bestehend aus 55 bis 89 Gewichtsteilen, vorzugsweise 67 bis 77 Gewichtsteilen wasserlöslicher Spurenelementsalze, vorzugsweise Mg und/oder Fe und/oder Zn und/oder Mn und/oder Cu und/oder Co und/oder Ni vorzugsweise als Sulfate und/oder Chloride und/oder Nitrate, B vorzugsweise als Borsäure und/oder Borsäureanhydrid und/oder Mo vorzugsweise als Ammoniummolybdat einschließlich 25 bis 100 Mol%, vorzugsweise 40 bis 70 Mol%, bezogen auf die Spurenelementkationen Komplexbildner in der Säureform, vorzugsweise Chelatkomplexbildner, insbesondere N-Carboxyalkylaminosäuren, 7 bis 20 Gewichtsteilen Wasser und 2 bis 18 Gewichtsteilen, vorzugsweise 4 bis 12 Gewichtsteilen Polyglykoläther mit mindestens 9 AeO-Einheiten, vorzugsweise vom mittleren Molekulargewicht 400 bis 10000, insbesondere 600 bis 6000 und/oder wasserlöslicher Polyglykolätherderivate mit mindestens 8 AeO-Einheiten, vorzugsweise mit 9 bis 230 und insbesondere mit 11 bis 60 AeO-Einheiten, wobei ggf. feste Polyglykoläther bzw. Polyglykolätherderivate im Wasseranteil des Ansatzes vorgelöst werden, unter Rühren mit $NH_3$-Gas bis zu einem pH-Wert von 3 bis 6, vorzugsweise 5 neutralisiert und die durch die Neutralisationswärme und ggf. Fremdwärme auf 35 bis 100°C, vorzugsweise 45 bis 70°C erwärmte und homogen gewordene Mischung unter weiterem Rühren auf Raumtemperatur (ca. 20 bis 25°C) abkühlt.

Eine Variante des erfindungsgemäßen Herstellungsverfahrens besteht darin, daß man den Komplexbildner statt in der Säureform teilweise oder vollständig als Ammoniumsalz in die Mischung einbringt, so daß die Neutralisation mit Ammoniak teilweise oder ganz entfallen kann und auch entsprechend weniger oder keine Neutralisationswärme zur Verfügung steht. Es kann dabei z.B. so verfahren werden, daß man die übrigen Bestandteile des Ansatzes mit dem Ammoniumsalz bzw. ggf. dem Ammoniumpartialsalz des Komplexbildners unter Rühren auf 35 bis 100°C, vorzugsweise 45 bis 70°C erwärmt, ggf. durch $NH_3$-Zugabe den

pH-Wert einstellt und die homogen gewordene Mischung unter weiterem Rühren auf Raumtemperatur abkühlt.

Das Rühren bzw. gute Durchmischen des Ansatzes währendlens ist erforderlich, um eine Separierung von Nährstoffen zu vermeiden.

Die erfindungsgemäß hergestellten Spurenelementdüngemittelpasten werden in völlig homogener Form erhalten. Sie lassen sich, z.B. in Tuben abgepackt, sehr leicht und einfach durch Herausdrücken in Strangform dosieren. In verschlossenen Behältern zeigen sie auch nach mehrwöchiger Lagerung bei Raumtemperatur oder bei 40°C, wie auch im Kältetest, keinerlei Separierung. Die Dichte der Pasten variiert mit der Art und Menge der Inhaltsstoffe und beträgt vorzugsweise etwa 1,4 bis 1,5 kg/l. Der pH-Wert ist in dem beanspruchten Bereich von 3 bis 6 nicht kritisch. Darüber oder darunter liegende pH-Werte können in manchen Fällen zu Störungen führen. Beispielsweise können zu hohe pH-Werte zu Schwierigkeiten bei der Komplexbildung und damit ggf. zu Beeinträchtigungen der Wasserlöslichhkeit von Spurenelementverbindungen führen. Zu stark saure Pasten können in manchen Fällen, z.B. bei direktem Kontakt ihrer wässrigen Lösungen mit Pflanzenteilen Phytotoxisschäden verursachen.

In Wasser sind die Spurenelementdüngemittelpasten sehr leicht und rasch löslich und bilden im allgemeinen klare Lösungen, insbesondere bei Konzentrationen bis zu etwa 10 Gew.%. Zur Kennzeichnung können die Pasten mit bekannten Färbemitteln eingefärbt werden. Bei Pasten mit Gehalten an solchen grenzflächenaktiven Polyglykolätherderivaten, die in wäßrigen Lösungen ggf. zum Schäumen neigen, können übliche Entschäumer, wie z.B. Silicone mitverwendet werden.

Als Polyglykoläther, die z.B. durch Einwirkung von Äthylenoxyd auf Glykol oder niedere Glykoläther gewonnen werden können, bzw. als wasserlösliche Polyglykolätherderivate können erfindungsgemäß zum Beispiel folgende Produkte eingesetzt werden:

Polyglykoläther (sie sind im Handel mist als „Polyglykole" bekannt), vorzugsweise solche mit mittleren Molekulargewichten von 400 bis 10 000, insbesondere 600 bis 6000. Sie sind unter Normalbedingungen im unteren Molgewichtsbereich flüssig und stellen im oberen Molgewichtsbereich feste, wachsartige Substanzen dar. Die genannten Polyglykoläther sind besonders bevorzugt. Als wasserlösliche Polyglykolätherderivate mit mindestens 8 AeO-Einheiten im Molekül kommen z.B. solche Polyglykoläther in Frage, deren vorzugsweise eine oder auch beide entständigen Hydroxylgruppen substituiert, vorzugsweise veräthert, verestert, durch Amino- oder Iminogruppen oder durch Säureamidgruppen substituiert sind und die auch grenzflächenaktiv sein können. Besonders bevorzugt sind Alkylpolyglykoläther und Alkylphenylpolyglykoläther, welche durch Addition von Äthylenoxyd an Alkohole, lineare oder verzweigte einwertige oder auch mehrwertige Alkohole, die auch ungesättigt sein können, bzw. an Alkylphenole gewonnen werden können. Geeignet sind weiterhin auch Acylpolyglykoläther.

Genannt seien beispielsweise Methylpolyglykoläther, Äthylpolyglykoläther, Butylpolyglykoläther, Octylpolyglykoläther, Laurylpolyglykoläther, Isotridecylpolyglykoläther, Hexadecylpolyglykoläther, Octadecylpolyglykoläther, vorzugsweise mit bis zu 60 AeO-Einheiten, wie z.B. $(n-C_{18})$-Alkylpolyglykoläther mit 50 AeO-Einheiten bzw. mit 25 AeO-Einheiten bzw. mit 11 AeO-Einheiten, $(C_{12}-C_{15})$-Alkylpolyglykoläther mit 25 AeO-Einheiten, Additionsprodukte des Äthylenoxyds an Glycerin, Glycerinester oder Sorbitane, Nonylphenylpolyglykoläther mit 30 AeO-Einheiten bzw. mit 23 AeO-Einheiten bzw. mit 15 AeO-Einheiten, Tributylphenylpolykoläther mit 50 AeO-Einheiten bzw. mit 18 AeO-Einheiten, ferner Ester von Polyglykoläthern mit organischen oder anorganischen Säuren bzw. Säurederivaten, z.B. niederen oder höheren Carbonsäuren wie Essigsäure, Propionsäure, Laurinsäure, $(C_8-C_{24})$-Carbonsäuren, Fettsäuren, z.B. $(C_{12}-C_{15})$-Fettacylpolyglykolester mit 25 AeO-Einheiten, sowie Ester mit Phosphorsäure und Phosphonsäuren bzw. deren Derivaten.

Bevorzugt sind ferner wasserlösliche, blockcopolymere Polyätherglykole, wie sie z.B. durch Addition von Äthylenoxyd (AeO) an ein Kondensationsprodukt aus Propylenoxyd (PyO) mit Propylenglykol gewonnen werden können, beispielsweise

BcPG 20 (20 Gew.% AeO, 80 Gew.% PyO, flüssig)
BcPG 40 (40 Gew.% AeO, 60 Gew.% PyO, flüssig)
BcPG 80 (80 Gew.% AeO, 20 Gew.% PyO, fest, Mol.-gew. 6600-9300).

Weiterhin können auch Mischungen aus verschiedenen Polyglykoläthern und/oder verschiedenen wasserlöslichen Polyglykolätherderivaten eingesetzt werden.

Als wasserlösliche Spurenelementverbindungen kommen alle bekannten wasserlöslichen und nicht phytotoxischen anorganischen und/oder organischen Verbindungen der bekannten Spurenelemente in Frage, wie sie als Spurennährstoffe zum Aufbau von Enzymsystemen der pflanzlichen Zelle für das normale pflanzliche Wachstum neben den bekannten Makronährstoffen wie N, P und K benötigt werden.

Zur Herstellung erfindungsgemäßer Spurenelementdüngemittelpasten werden als wasserlösliche Spurenelementsalze z.B. insbesondere die Chloride und/oder Sulfate und/oder Nitrate, ggf. auch die Acetate, insbesondere der Elemente Mg, Fe, Zn, Mn, Cu, Co, Ni eingesetzt, ferner Mo, vorzugsweise in Form von wasserlöslichen Molybdaten wie z.B. Ammoniummolybdat, sowie B, vorzugsweise in Form von Borsäure und/oder Borsäureanhydrid. Es können aber auch andere wasserlösliche Salze der genannten Spurenelemente verwendet werden. Auch wasserlösliche Calciumsalze können eingesetzt werden. Die Spurenelementverbindungen können als Pflanzennährstoffe beliebig untereinander kombiniert und den jeweiligen Erfordernissen angepaßt werden. Es können also sowohl Pasten mit einzelnen Spurennährstoffen, als auch solche mit beliebigen Kombinationen aller bekannten Spurenelementverbindungen hergestellt werden.

Zur Gewährleistung der Wasserlöslichkeit erfordern verschiedene Spurenelemente bekanntlich eine Stabilisierung ihrer Salze, z.B. durch geeignete Komplexbildner, und die im Handel erhältlichen flüssigen oder festen Spurenkonzentrate enthalten die Spurensalze im allgemeinen bereits in Kombinationen mit entsprechenden Komplexbildnern.

Bei der Herstellung erfindungsgemäßer Spurenelementdüngemittelpasten kommen für die Komplexierung der Spurenelementkationen an sich bekannte Komplexbildner zur Anwendung, welche mit den genannten Kationen wasserlösliche und hydrolyseresistente Komplexverbindungen bilden können. Diese Komplexbildner besitzen im allgemeinen neben salzbildungsfähigen sauren Gruppen noch weitere Gruppierungen im Molekül, welche durch Nebenvalenzkräfte die an die sauren Gruppen gebundenen Kationen zusätzlich binden können und so zu wasserlöslichen und hydrolyseresistenten Komplexverbindungen führen, insbesondere mit Metallkationen und vor allem mit den Kationen der als Spurennährstoffe verwendeten Übergangselemente.

Als Komplexbildner seien beispielsweise genannt:

Derivate der Asparaginsäure, substituierte Aminopolycarbonsäuren wie z.B. N-(2-hydroxybenzyl)-substituierte Aminopolycarbonsäuren, Phosphonocarbonsäuren wie z.B. 2-Phospho-butan-1,2,4-tricarbonsäure, Phosphonsäuren wie z.B. 1,2-Diaminocyclohexantetrakis-(methylen-phosphonsäure), Ligninsulfonsäuren und sulfonierte Tannine, Gluconsäure oder Glucoheptonsäure.

Bevorzugt werden als Komplexbildner z.B. N-Carboxyalkylaminosäuren, die auch substituiert sein können, eingesetz. Sie können mit den Spurenelementkationen Chelatkomplexverbindungen bilden, welche sehr vorteilhafte Eigenschaften aufweisen.

Als besonders bevorzugte N-Carboxyalkylaminosäuren seien z.B. die Äthylendi-aminotetraessigsäure (EDTA) sowie die Nitrilo-triessigsäure (NTA) genannt.

Ebenfalls bevorzugt sind Diäthylentriamino-pentaessigsäure Hydroxyäthyläthylendiamino-triessigsäure (HEEDTA) und/oder Cyclohexan-1,2-diaminotetraessigsäure (CDTA).

Die genannten Komplexbildner werden im allgemeinen einzeln eingesetzt, sie können aber ggf. auch miteinander kombiniert werden.

Da die gegannten Komplexbildner in ihrer Säureform meist nur ungenügend oder überhaupt nicht in Wasser löslich sind, kommen sie in wässrigen Systemen oft z.B. als wasserlösliche Alkalisalze zur Anwendung, wobei sie mit den genannten Spurenelementkationen leicht die gewünschten Komplexverbindungen bilden.

Ein besonders vorteilhaftes Merkmal der vorliegenden Erfindung besteht u.a. darin, daß die genannten Komplexbildner als Ammoniumsalze mit den Spurenelementkationen zur Umsetzung gebracht werden. Die Herstellung der Ammoniumsalze aus der Säureform der Komplexbildner und deren unmittelbare oder ggf. auch nachfolgende Umsetzung mit den Spurenelementkationen zu den Spurenelementkomplexverbindungen erfolgt bei der Herstellung der Spurenelementdüngemittelpasten vorzugsweise in einer Art Eintopfverfahren durch Neutralisation mit gasförmigen Ammoniak. Die Verwendung der Ammoniumsalze der Komplexbildner anstelle der bisher für Komplexierungszwecke meist eingesetzten Natriumsalze bietet gleichzeitig mehrere Vorteile. $NH_3$ hat ein erheblich niedrigeres Äquivalentgewicht als Natrium und ermöglicht daher prozentual höhere Spurennährstoffgehalte in den Pasten. Der durch die Ammoniakneutralisation in die Pasten eingebrachte Ammoniumstickstoff bleibt außerdem als zusätzliche Stickstoffdüngerkomponente in den Pasten zur Verfügung und erhöht damit deren Nährstoffgehalt um einen wichtigen Makronährstoff, was bei der bisher bekannten Komplexierung von Spurenelementkationen mit dem Natriumsalz der Komplexbildner, wobei Natriumsalze als wertloser Ballast anfallen, nicht möglich ist. Schließlich können bei der Pastenherstellung die Säureformen der Komplexbildner als filterfeuchte Produkte, wie sie z.B. bei der Produktion anfallen, eingesetzt werden, so daß sich deren Trocknung erübrigt. Eine partielle oder vollständige Neutralisation der Säureform der Komplexbildner kann aber auch durch Begasen der filterfeuchten Produkte mit Ammoniak in einem getrennten Arbeitsgang der eigentlichen Pastenherstellung vorangestellt werden und in manchen Fällen vorteilhaft sein.

Der durch die Ammoniakneutralisation der Säureform der Komplexbildner in die Spurenelementdüngemittelpasten eingebrachte Stickstoffgehalt beträgt z.B. zwischen 2 und 7 Gew.%, vorzugsweise 3 bis 6 Gew.% N.

Ein besonderer Vorteil des erfindungsgemäßen Pastenherstellungsverfahrens kann weiterhin auch darin gesehen werden, daß außer dem Komplexbildner z.B. auch die Spurenelementsalze nicht nur als trockene Produkte, sondern ggf. vorteilhaft auch in filterfeuchter Form eingesetzt werden können, wobei die mit den feuchten Produkten eingebrachten Wassermengen in der Wasserbilanz des Verfahrensproduktes zu berücksichtigen sind. Letzteres gilt auch für ggf. vorhandene Wassergehalte in den Polyglykoläthern bzw. deren Derivaten.

Die in den erfindungsgemäßen Spurenelement-düngemittelpasten enthaltenen Spurenelement-kationen sind zu 25 bis 100 Mol%, vorzugsweise 40 bis 70 Mol% komplexiert. Es hat sich gezeigt, daß die Beständigkeit von wässrigen Lösungen der Pasten im mittleren und oberen Komplexierungsbereich größer ist als im unteren Bereich.

Da die erfindungsgemäßen Spurenelementdüngemittelpasten sich in Wasser praktisch sofort auflösen, entfallen für ihre Anwendung aus wäßrigen Lösungen die z.B. für die Anwendung von entsprechenden festen Spurenelementdüngemitteln aus wäßrigen Lösungen erforderlichen zusätzlichen Arbeitsgänge, wie Anteigen, Vorlösen, Wasser vorwärmen vollständig. Auch das leidige Problem des Staubens pulverförmiger Düngemittel existiert bei den Pasten nicht. Darüber hinaus liegen die Nährstoffgehalte in den Pasten deutlich höher als in gleichvolumigen bekannten Spurenelementflüssigdüngern bzw. entsprechenden festen Spurendüngern, bedingt u.a. durch das niedrigere Molekulargewicht der Ammoniumsalze vergleichsweise zu den entsprechenden Na- und auch K-Salzen in den bekannten Spurenelementdüngern. Auch die Dosierung und Handhabung der Spurenelementdüngemittelpasten, z.B. aus Tuben ist wesentlich einfacher und unproblematischer, vergleichsweise zu bekannten vergleichbaren Spurenelementdüngemittelformulierungen. Im Vergleich zu den flüssigen Spurendüngemitteln besteht außerdem keine Gefahr des Auslaufens aus undichten Behältern. Durch die im Vergleich zu den Schüttgewichten von festen Spurenelementdüngern bzw. den spezifischen Gewichten von flüssigen Spurenelementdüngemitteln sehr hohe Dichte von ca. 1,4 bis 1,5 kg/l bei den erfindungsgemäßen Pasten können durch die letzteren erhebliche Lager-, Verpackungs- und Transportvolumina eingespart werden.

Das Verhältnis der einzelnen Pflanzennährstoffe in den erfindungsgemäßen Spurenelementdüngemittelpasten ist unkritisch und kann den bei Düngemitteln üblichen und bekannten Erfordernissen angepaßt werden. Es können sowohl einzelne Spurennährstoffe als auch Nährstoffkombinationen als Pasten formuliert werden. Bedingt durch die $NH_3$-Neutralisation des Komplexbildners enthalten sie alle mehr oder weniger große Anteile an Ammoniumstickstoff als Makronährstoff.

Die erfindungsgemäßen Spurenelementdüngemittelpasten besitzen eine ausgezeichnete Düngewirksamkeit. Zur Anwendung werden sie in Wasser gelöst und als wäßrige Lösungen auf die zu düngenden Pflanzenkulturen und/oder Kulturböden bzw. Kultursubstrate aufgebracht oder ggf. auch den Kulturböden bzw. Kultursubstraten beigemischt. Ihre Anwendung kann auch mit der Anwendung von üblichen Makronährstoffdüngern kombiniert werden. Die Anwendungskonzentration ist nicht kritisch und kann den jeweiligen praktischen Erfordernissen, z.B. bezüglich Nährstoffmenge oder Pflanzen- bzw. Bodeneigenarten angepaßt werden. So können z.B. Anwendungslösungen mit Pastengehalten von 0,005 bis 5 Gew.% besonders vorteilhaft sein, jedoch sind auch niedrigere und höhere Konzentrationen denkbar und möglich und können in manchen Fällen auch zweckmäßig sein.

Insgesamt gesehen beinhalten die neuen Spurenelementdüngemittelpasten einen beachtlichen technischen Fortschritt, ihre Eigenschaftsmerkmale sind außerordentlich überraschend und aus dem bekannten Stand der Technik nicht herleitbar.

Die Erfindung wird durch die nachfolgenden Beispiele erläutert.

*Beispiel 1*

*Mehrspurennährstoffpaste*

| Formulierungsbestandteile: | Nährstoffgehalt in der fertigen Paste: |
|---|---|
| 30,81 Gew.% $MgSO_4 \times 7\ H_2O$ | 5,0 Gew.% MgO |
| 6,08 Gew.% $MnSO_4 \times 4\ H_2O$ | 1,5 Gew.% Mn |
| 7,47 Gew.% $FeSO_4 \times 7\ H_2O$ | 1,5 Gew.% Fe |
| 6,60 Gew.% $ZnSO_4 \times 7\ H_2O$ | 1,5 Gew.% Zn |
| 1,96 Gew.% $CuSO_4 \times 5\ H_2O$ | 0,5 Gew.% Cu |
| 1,72 Gew.% $H_3BO_3$ | 0,3 Gew.% B |
| 0,02 Gew.% $(NH_4)_6Mo_7O_{24} \times 4\ H_2O$ | 0,01 Gew.% Mo |
| 18,00 Gew.% Äthylendiamintetraessigsäure (EDTA) | |
| 18,00 Gew.% Wasser | |
| 4,75 Gew.% Polyglykol 6000, geprillt | |
| Rest zu 100 Gew.% Ammoniak | 3,7 Gew.% N |

*Pastenherstellung (1 kg-Ansatz):* Die oben genannten Formulierungsbestandteile mit Ausnahme des Ammoniaks werden in dem angegebenen Mengenverhältnis in einem geschlossenen und beheizbaren 2-l-Rührgefäß, das mit einem randgängigen Rührer ausgestattet ist, vorgelegt. Anschließend wird unter Rühren $NH_3$-Gas in das Rührgefäß eingeleitet, bis die Mischung einen pH-Wert von 3,0 (gemessen mit einer Glaselektrode) erreicht hat. Die Temperatur des Ansatzes steigt durch die freiwerdende Neutralisationswärme auf ca. 45°C an. Erforderlichenfalls muß der Ansatz durch zusätzliches Erwärmen auf die genannte Temperatur gebracht werden. Es wird eine homogene, flüssige Phase erhalten, die anschließend unter fortlaufendem Rühren auf Raumtemperatur (ca. 20°C) abgekühlt und in homogener Pastenform erhalten wird. Die Paste ist von cremeartigpastöser, geschmeidiger Konsistenz und zeigt auch nach mehrwöchiger Lagerung bei Raumtemperatur bzw. bei +40°C sowie bei −10°C keine Separierung. Die Paste ist sehr gut wasserlöslich und bildet klare Lösungen. Der Komplexierungsgrad der in der Paste enthaltenen Spurenelementkationen beträgt 29,4 Mol.%.

*Beispiel 2*

*Mehrspurennährstoffpaste*

| Formulierungsbestandteile: | Nährstoffgehalt in der fertigen Paste: |
|---|---|
| 30,81 Gew.% $MgSO_4 \times 7\ H_2O$ | 5,0 Gew.% MgO |
| 7,30 Gew.% $MnSO_4 \times 4\ H_2O$ | 1,8 Gew.% Mn |
| 8,96 Gew.% $FeSO_4 \times 7\ H_2O$ | 1,8 Gew.% Fe |
| 4,40 Gew.% $ZnSO_4 \times 7\ H_2O$ | 1,0 Gew.% Zn |
| 1,96 Gew.% $CuSO_4 \times 5\ H_2O$ | 0,5 Gew.% Cu |
| 1,19 Gew.% $H_3BO_3$ | 0,2 Gew.% B |
| 0,02 Gew.% $(NH_4)_6Mo_7O_{24} \times 4\ H_2O$ | 0,01 Gew.% Mo |
| 0,005 Gew.% $CoSO_4 \times 7\ H_2O$ | 0,001 Gew.% Co |
| 0,005 Gew.% $NiSO_4 \times 7\ H_2O$ | 0,001 Gew.% Ni |
| 18,30 Gew.% Nitrilotriessigsäure (NTA) | |
| 18,45 Gew.% Wasser | |

*Mehrspurennährstoffpaste*
*Formulierungsbestandteile:*     *Nährstoffgehalt in*
                                      *der fertigen Paste:*

| | |
|---|---|
| 4,00 Gew.% | |
|   Polyglykol 6000, geprillt | |
| 4,6 Gew.% Ammoniak | 3,7 Gew.% N |

Die Herstellung der Paste erfolgt wie in Beispiel 1 beschrieben, der pH-Wert wird jedoch auf 3,2 eingestellt. Konsistenz, Beständigkeit und Löslichkeit der Paste sind wie in Beispiel 1 beschrieben. Der Komplexierungsgrad der in der Paste enthaltenen Spurenelementkationen beträgt 45 Mol.%.

### Beispiel 3

*Mehrspurennährstoffpaste*
*Formulierungsbestandteile:*     *Nährstoffgehalt in*
                                        *der fertigen Paste:*

| | |
|---|---|
| 24,65 Gew.% $MgSO_4 \times 7\ H_2O$ | 4,0 Gew.% MgO |
| 6,08 Gew.% $MnSO_4 \times 4\ H_2O$ | 1,5 Gew.% Mn |
| 7,47 Gew.% $FeSO_4 \times 7\ H_2O$ | 1,5 Gew.% Fe |
| 6,60 Gew.% $ZnSO_4 \times 7\ H_2O$ | 1,5 Gew.% Zn |
| 1,96 Gew.% $CuSO_4 \times 5\ H_2O$ | 0,5 Gew.% Cu |
| 1,72 Gew.% $H_3BO_3$ | 0,3 Gew.% B |
| 0,02 Gew.% | |
|   $(NH_4)_6Mo_7O_{24} \times 4\ H_2O$ | 0,01 Gew.% Mo |
| 25,60 Gew.% EDTA | |
| 13,73 Gew.% Wasser | |
| 5,75 Gew.% | |
|   Polyglykol 6000, geprillt | |
| 6,42 Gew.% Ammoniak | 5,2 Gew.% N |

Die Herstellung der Paste erfolgt wie in Beispiel 1 beschrieben, der pH-Wert wird jedoch auf 5,2 eingestellt und die Temperatur des Ansatzes auf 50°C gebracht. Konsistenz, Beständigkeit und Löslichkeit der Paste sind wie in Beispiel 1 beschrieben. Der Komplexierungsgrad der in der Paste enthaltenen Spurenelementkationen beträgt 47 Mol.%. Die Dichte der Paste bei 20°C beträgt 1,47 kg/l.

### Beispiel 4

*Eisennährstoffpaste*
*Formulierungsbestandteile:*     *Nährstoffgehalt in*
                                        *der fertigen Paste:*

| | |
|---|---|
| 31,7 Gew.% $FeSO_4 \times 7\ H_2O$ | 6,3 Gew.% Fe |
| 35,6 Gew.% EDTA | |
| 14,1 Gew.% Wasser | |
| 10,6 Gew.% | |
|   Polyglykol 6000, geprillt | |
| 8,0 Gew.% Ammoniak | 6,6 Gew.% N |

Die Herstellung der Paste erfolgt analog zu Beispiel 1. Der pH-Wert wird jedoch auf 6,0 eingestellt und der Ansatz auf 65°C gebracht. Konsistenz, Beständigkeit und Löslichkeit der Paste sind wie in Beispiel 1 beschrieben. Der Komplexierungsgrad der Eisenkationen liegt bei 100 Mol.%.

### Beispiel 5

*Zinknährstoffpaste*
*Formulierungsbestandteile:*     *Nährstoffgehalt in*
                                        *der fertigen Paste:*

| | |
|---|---|
| 48,5 Gew.% $ZnSO_4 \times 7\ H_2O$ | 11,0 Gew.% Zn |
| 26,8 Gew.% EDTA | |
| 8,9 Gew.% Wasser | |
| 10,2 Gew.% | |
|   Polyglykol 6000, geprillt | |
| 5,6 Gew.% Ammoniak | 4,6 Gew.% N |

Die Herstellung der Paste erfolgt analog zu Beispiel 1. Der pH-Wert wird jedoch auf 5,3 eingestellt und der Ansatz auf 50°C gebracht. Konsistenz, Beständigkeit und Löslichkeit der Paste sind wie in Beispiel 1 beschrieben. Der Komplexierungsgrad der Zinkkationen beträgt 54,3 Mol.%.

### Beispiele 6 bis 14

*Mehrspurennährstoffpasten*

Den folgenden Beispielen 6 bis 14 liegen die Rezeptur des Beispiels 3 sowie das dort beschriebene Pastenherstellungsverfahren zugrunde. In Abänderung zu Beispiel 3 wird lediglich der Formulierungsbestandteil Polyglykol 6000, geprillt (5,75 Gew.%) durch jeweils die gleiche Menge (5,75 Gew.%) der nachstehend aufgeführten Polyglykoläther bzw. Polyglykolätherderivate ersetzt, und die Temperatur der Ansätze wird auf 68-70°C gebracht. Die pH-Werte der Pasten, deren Nährstoffgehalte sowie der Komplexierungsgrad der Spurenelementkationen entsprechen ebenfalls den Werten des Beispiels 3.

| *Beispiel* | |
|---|---|
| *Nr.* | *Polyglykolätherbestandteil* |
| 6 | Polyglykol 400 |
| 7 | Polyglykol 600 |
| 8 | Polyglykol 1000 |
| 9 | Polyglykol 4000 |
| 10 | Polyglykol 8000 |
| 11 | Polyglykol 10 000 |
| 12 | n-$C_{18}$-Alkylpolyglykoläther (50 AeO) |
| 13 | Nonylphenylpolyglykoläther (30 AeO) |
| 14 | Tributylphenylpolyglykoläther (50 AeO) |

Konsistenz, Beständigkeit und Löslichkeit der Pasten entsprechen den Angaben in Beispiel 1. Lediglich die Pasten der Beispiele 6 und 7 zeigen nach längerem Lagern Separierungserscheinungen und sind daher nur bedingt lagerfähig. Dagegen sind die Pasten der Beispiele 8 bis 14 von ausgezeichneter Lagerfähigkeit.

### Beispiel 15

*Mehrspurennährstoffpaste*
*Formulierungsbestandteile:*     *Nährstoffgehalt in*
                                        *der fertigen Paste:*

| | |
|---|---|
| 24,65 Gew.% $MgSO_4 \times 7\ H_2O$ | 4,0 Gew.% MgO |
| 6,08 Gew.% $MnSO_4 \times 4\ H_2O$ | 1,5 Gew.% Mn |
| 7,47 Gew.% $FeSO_4 \times 7\ H_2O$ | 1,5 Gew.% Fe |
| 6,60 Gew.% $ZnSO_4 \times 7\ H_2O$ | 1,5 Gew.% Zn |
| 1,96 Gew.% $CuSO_4 \times 5\ H_2O$ | 0,5 Gew.% Cu |
| 1,72 Gew.% $H_3BO_3$ | 0,3 Gew.% B |

*Mehrspurennährstoffpaste*

| *Formulierungsbestandteile:* | *Nährstoffgehalt in der fertigen Paste:* |
|---|---|
| 0,02 Gew.% $(NH_4)_6Mo_7O_{24} \times 4 H_2O$ | 0,01 Gew.% Mo |
| 21,70 Gew.% EDTA | |
| 7,21 Gew.% Wasser | |
| 17,00 Gew.% BcPG 20 | |
| 5,59 Gew.% Ammoniak | 4,6 Gew.% N |

Die Herstellung der Paste erfolgt wie in Beispiel 1 beschrieben, der pH-Wert wird jedoch auf 5,4 eingestellt. Konsistenz, Beständigkeit und Löslichkeit der Paste sind wie in Beispiel 1 beschrieben. Der Komplexierungsgrad der in der Paste enthaltenen Spurenelementkationen beträgt 40 Mol.%.

*Beispiel 16*

*Mehrspurennährstoffpaste*

Es wird im wesentlichen wie in Beispiel 15 verfahren, jedoch mit der Abänderung, daß man von den dort aufgeführten Formulierungsbestandteilen in einem vorangestellten Arbeitsgang zunächst die EDTA und das Ammoniak im Wasseranteil der Rezeptur umsetzt und die dabei resultierende wässrige Lösung des Ammoniumsalzes der EDTA anschließend mit den übrigen Formulierungsbestandteilen des Beispiels 15 analog zu der dort angegebenen Methode unter Erwärmen auf 45°C und Einstellen auf pH 5,4 in eine Paste überführt. Die erhaltene Paste entspricht in ihren Eigenschaften praktisch der Paste des Beispiels 15.

*Beispiel 17*

*Mehrspurennährstoffpaste*

| *Formulierungsbestandteile:* | *Nährstoffgehalt in der fertigen Paste:* |
|---|---|
| 24,65 Gew.% $MgSO_4 \times 7 H_2O$ | 4,0 Gew.% MgO |
| 6,08 Gew.% $MnSO_4 \times 4 H_2O$ | 1,5 Gew.% Mn |
| 7,47 Gew.% $FeSO_4 \times 7 H_2O$ | 1,5 Gew.% Fe |
| 6,60 Gew.% $ZnSO_4 \times 7 H_2O$ | 1,5 Gew.% Zn |
| 1,96 Gew.% $CuSO_4 \times 5 H_2O$ | 0,5 Gew.% Cu |
| 1,72 Gew.% $H_3BO_3$ | 0,3 Gew.% B |
| 0,02 Gew.% $(NH_4)_6Mo_7O_{24} \times 4 H_2O$ | 0,01 Gew.% Mo |
| 25,25 Gew.% EDTA | |
| 8,42 Gew.% Wasser | |
| 12,00 Gew.% iso-$C_{13}$-Alkyl-polyglykoläther (8 AeO) | |
| 5,83 Gew.% Ammoniak | 4,8 Gew.% N |

Die Herstellung der Paste erfolgt wie in Beispiel 1 beschrieben, der pH-Wert wird jedoch auf 5,2 eingestellt und die Temperatur des Ansatzes auf 60°C gebracht. Konsistenz, Beständigkeit und Löslichkeit der Paste sind wie in Beispiel 1 beschrieben. Der Komplexierungsgrad der in der Paste enthaltenen Spurenelementkationen beträgt 46,7 Mol.%.

**Patentansprüche**

1. Wasserlösliche Spurenelementdüngemittelpasten, gekennzeichnet durch einen Gehalt von 55 bis 89 Gew.% wasserlöslicher Spurenelementverbindungen, wobei die Spurenelementkationen zu 25 bis 100 Mol.% in komplexierter Form vorliegen, 2 bis 7 Gew.% Ammoniumstickstoff als Makronährstoff, 2 bis 18 Gew.% Polyglykoläther mit mindestens 9 AeO-Einheiten und/oder wasserlöslicher Polyglykolätherderivate mit mindestens 8 AeO-Einheiten sowie 7 bis 20 Gew.% Wasser.

2. Wasserlösliche Spurenelementdüngemittelpasten gemäß Anspruch 1, dadurch gekennzeichnet, daß sie Spurenelementverbindungen von Magnesium und/oder Eisen und/oder Zink und/oder Mangan und/oder Kupfer und/oder Kobalt und/oder Nickel und/oder Bor und/oder Molybdän enthalten.

3. Wasserlösliche Spurenelementdüngemittelpasten gemäß Ansprüchen 1 und 2, dadurch gekennzeichnet, daß sie die komplexierten Spurenelementkationen in Form von Chelatverbindungen mit N-Carboxyalkylaminosäuren enthalten.

4. Verfahren zur Herstellung von wasserlöslichen Spurenelementdüngemittelpasten gemäß Anspruch 1, dadurch gekennzeichnet, daß man eine Mischung bestehend aus 55 bis 89 Gewichtsteilen wasserlöslicher Spurenelementsalze einschließlich 25 bis 100 Mol.% Komplexbildner in der Säureform, bezogen auf die Spurenelementkationen, 7 bis 20 Gewichtsteilen Wasser und 2 bis 18 Gewichtsteilen Polyglykoläther mit mindestens 9 AeO-Einheiten und/oder wasserlöslicher Polyglykolätherderivate mit mindestens 8 AeO-Einheiten, wobei vorzugsweise feste Polyglykoläther bzw. Polyglykolätherderivate im Wasseranteil des Ansatzes vorgelöst werden, unter Rühren mit $NH_3$-Gas bis zu einem pH-Wert von 3 bis 6 neutralisiert und die durch die Neutralisationswärme und gegebenenfalls Fremdwärme auf 35 bis 100°C erwärmte und homogen gewordene Mischung unter weiterem Rühren auf Raumtemperatur von 20 bis 25°C abkühlt.

5. Verfahren nach Anspruch 4, dadurch gekennzeichnet, daß man als wasserlösliche Spurenelementsalze Mg und/oder Fe und/oder Zn und/oder Mn und/oder Cu und/oder Co und/oder Ni als Sulfate und/oder Chloride und/oder Nitrate, B als Borsäure und/oder Borsäureanhydrid und/oder Mo als Ammoniummolybdat einsetzt.

6. Verfahren nach Ansprüchen 4 und 5, dadurch gekennzeichnet, daß man als Komplexbildner N-Carboxyalkylaminosäuren einsetzt.

7. Verfahren nach Anspruch 6, dadurch gekennzeichnet, daß man als Komplexbildner Äthylendiaminotetraessigsäure und/oder Nitrilotriessigsäure einsetzt.

8. Verfahren nach Ansprüchen 4 bis 7, dadurch gekennzeichnet, daß man den Komplexbildner statt in der Säureform teilweise oder vollständig als Ammoniumsalz in die Mischung einbringt, so daß die Neutralisation mit $NH_3$ teilweise oder ganz entfällt und man gegebenenfalls durch $NH_3$-Zugabe den pH-Wert einstellt.

9. Verwendung von Spurenelementdüngemittelpasten gemäß Ansprüchen 1 bis 3, vorzugsweise in Form ihrer wäßrigen Lösungen, zur Pflanzendüngung, ggf. kombiniert mit üblichen Makronährstoffdüngern.

10. Verfahren zur Pflanzendüngung, dadurch gekennzeichnet, daß man auf Pflanzenkulturen und/oder Kulturböden und/oder Kultursubstrate wässrige Lösungen von Spurenelementdüngemittelpasten gemäß Ansprüchen 1 bis 3 aufbringt.

## Claims

1. Water-soluble gelated micronutrient fertilizers containing from 55 to 89% by weight of water-soluble micronutrient compounds of which 25 to 100 mol % are present in complexed form, from 2 to 7% by weight of ammonium nitrogen as macronutrient, from 2 to 18% by weight of a polyglycol ether having at least 9 ethylene oxide (EO) units in the molecule and/or a water-soluble polyglycol ether derivative having at least 8 ethylene oxide units in the molecule, and from 7 to 20% by weight of water.

2. Water-soluble gelated micronutrient fertilizers as claimed in claim 1, wherein the micronutrient is selected from the group consisting of Mg, Fe, Zn, Mn, Cu, Co, Ni, B and Mo.

3. Water-soluble gelated micronutrient fertilizers as claimed in claims 1 and 2, wherein the micronutrient cations are complexed in the form of chelate compounds with N-carboxyalkylamino acids.

4. Process for the manufacture of water-soluble gelated micronutrient fertilizers as claimed in claim 1, which comprises neutralizing with $NH_3$ gas while stirring a mixture consisting of 55 to 89 parts by weight of water-soluble micronutrient salts including 25 to 100 mol % calculated on the micronutrient cations, of complex forming agents in the acid form, from 7 to 20 parts by weight of water and from 2 to 18 parts by weight, of a polyglycol ether having at least 9 ethylene oxide units in the molecule and/or a water-soluble polyglycol ether derivative having at least 8 ethylene oxide units, solid polyglycol ethers or polyglycol ether derivatives possibly being previously dissolved in the water portion of the fertilizer, until the mixture has acquired a pH of from 3 to 6, and cooling to room temperature (about 20 to 25°C) while stirring the homogeneous mixture obtained and heated to 35 to 100°C, by the heat of neutralization and additional heat, if necessary.

5. The process of claim 4, wherein the water-soluble micronutrient salt is selected from the group consisting of Mg, Fe, Zn, Mn, Cu, Co, Ni in the form of their sulfates, chlorides, or nitrates, B in the form of boric acid and/or boric anhydride and Mo in the form of ammonium molybdate.

6. The process of claims 4 and 5, wherein N-carboxyalkylamino acids are used as complexing agents.

7. The process of claim 6, wherein ethylenediaminotetraacetic acid and/or nitrilotriacetic acid is used as complexing agent.

8. The process of claims 4 to 7, wherein the complexing agent is added not in the acid form but partially or completely in the form of its ammonium salt and the pH is adjusted, if necessary, by adding $NH_3$.

9. Method of using a gelated water-soluble fertilizer as claimed in claims 1 to 3, preferably in the form of an aqueous solution, for plant fertilization, optionally together with the usual macronutrients.

10. Process for the fertilization of plants which comprises applying to the plants and/or culture soil or medium an aqueous solution of a water-soluble gelated micronutrient fertilizer as claimed in claims 1 to 3.

## Revendications

1. Pâtes hydrosolubles d'engrais à base d'oligo-éléments, caractérisées en ce qu'elles contiennent de 55 à 89% en poids de composés hydrosolubles d'oligo-éléments, les cations d'oligo-éléments étant à l'état complexé en proportions de 25 à 100 mol %, de 2 à 7% en poids d'azote ammoniacal en tant que macrosubstance nutritive, de 2 à 18% en poids d'éthers de polyglycols à au mois 9 motifs d'OE et/ou de dérivés hydrosolubles d'éthers de polyglycols à au moins 8 motifs d'OE, et de 7 à 20% en poids d'eau.

2. Pâtes hydrosolubles d'engrais à base d'oligo-éléments selon la revendication 1, caractérisées en ce qu'elles contiennent des composés d'oligo-éléments magnésium et/ou fer et/ou zinc et/ou manganèse et/ou cuivre et/ou cobalt et/ou nickel et/ou bore et/ou molybdène.

3. Pâtes hydrosolubles d'engrais à base d'oligo-éléments selon l'une des revendications 1 ou 2, caractérisées en ce qu'elles contiennent les cations d'oligo-éléments complexés à l'état de chélates de N-carbonylalkylaminoacides.

4. Procédé de préparation des pâtes hydrosolubles d'engrais à base d'oligo-éléments selon la revendication 1, caractérisé en ce qu'on neutralise sous agitation à l'aide de $NH_3$ gazeux jusqu'à un pH de 3 à 6 un mélange constitué de 55 à 89 parties en poids de sels hydrosolubles d'oligo-éléments comprenant de 25 à 100 mol % par rapport aux cations d'oligo-éléments d'agents complexants à l'état d'acides, de 7 à 20 parties en poids d'eau et de 2 à 18 parties en poids d'éthers de polyglycols à au moins 9 motifs d'OE et/ou de dérivés hydrosolubles d'éthers de polyglycols à au moins 8 motifs d'OE, les éthers de polyglycols et dérivés d'éthers de polyglycols solides étant de préférence dissous au préalable dans l'eau du mélange, et on refroidit le mélange, qui a été porté à une température de 35 à 100°C par la chaleur de neutralisation et, le cas échéant, une chaleur extérieure, et a été rendu homogène sous agitation à la température ambiante de 20 à 25°C.

5. Procédé selon la revendication 4, caractérisé en ce qu'on utilise, en tant que sels hydrosolubles d'oligo-éléments, Mg et/ou Fe et/ou Zn et/ou Mn et/ou Cu et/ou Co et/ou Ni à l'état de sulfates et/ou de chlorures et/ou de nitrates, B à l'état d'acide borique et/ou d'anhydride borique et/ou Mo à l'état de molybdate d'ammonium.

6. Procédé selon l'une des revendications 4 ou 5, caractérisé en ce qu'on utilise, comme agents complexants, des N-carboxyalkylaminoacides.

7. Procédé selon la revendication 6, caractérisé en ce qu'on utilise, comme agents complexants, l'acide éthylènediaminetétracétique et/ou l'acide nitriloacétique.

8. Procédé selon l'une quelconque des revendications 4 à 7, caractérisé en ce qu'on introduit les agents complexants dans le mélange non pas à l'état d'acides mais, en totalité ou en partie, à l'état de sels d'ammonium, de sorte que la neutralisation par $NH_3$ est supprimée en totalité ou en partie, et on règle le cas échéant le pH par addition de $NH_3$.

9. Utilisation des pâtes d'engrais à base d'oligo-éléments selon l'une quelconque des revendications 1 à 3, de préférence à l'état de solutions aqueuses, pour la fumure des végétaux, le cas échéant en combinaison avec des engrais usuels à base de macrosubstances nutritives.

10. Procédé pour fumer les végétaux, caractérisé en ce qu'on applique sur des cultures de végétaux et/ou des sols de cultures et/ou des substrats de culture des solutions aqueuses de pâtes d'engrais à base d'oligo-éléments selon l'une quelconque des revendications 1 à 3.